Europäisches Patentamt

European Patent Office

Office européen des brevets

(11) Publication number: **0 230 894 B1**

(12) **EUROPEAN PATENT SPECIFICATION**

(45) Date of publication of patent specification: **03.06.92**   (51) Int. Cl.5: **C02F 1/72**, C02F 1/74, C02F 1/66, C02F 9/00

(21) Application number: **87100287.9**

(22) Date of filing: **12.01.87**

(54) Method of an apparatus for water treatment.

(30) Priority: **21.01.86 US 820955**

(43) Date of publication of application:
**05.08.87 Bulletin 87/32**

(45) Publication of the grant of the patent:
**03.06.92 Bulletin 92/23**

(84) Designated Contracting States:
**BE DE FR GB**

(56) References cited:
**EP-A- 0 051 685**
**DE-A- 2 927 911**
**DE-B- 2 344 467**
**US-A- 4 297 214**

(73) Proprietor: **Chemical Separation Technology Inc.**
**1700 Painters Run Road**
**Pittsburgh PA 15243(US)**

(72) Inventor: **Kanzleiter, Richard S.**
**107 Julrich Drive**
**McMurray, PA 15317(US)**
Inventor: **Simonetti, Thomas G.**
**452 East McMurray Road**
**McMurray, PA 15317(US)**
Inventor: **Ball, Kenneth E.**
**1700 Painters Run Road**
**Pittsburgh, PA 15243(US)**
Inventor: **Stevenson, Sanford N.**
**124 Braun Drive**
**McMurray, PA 15317(US)**

(74) Representative: **Howden, Christopher Andrew et al**
**FORRESTER & BOEHMERT Franz-Joseph-Strasse 38**
**W-8000 München 40(DE)**

Rank Xerox (UK) Business Services

## Description

THIS INVENTION relates to a method of and apparatus for water treatment and is particularly but not exclusively concerned with treatment of drainage water from mines.

Concern for the quality of natural water has grown in recent years. Acidic and metal-bearing discharges from mineral mining and processing, for example, have resulted in significant degradation of the quality of receiving streams and rivers. Lightly buffered waters in natural drainage systems have become acidic and have been depleted of dissolved oxygen, which causes the waters to be uninhabitable by most aquatic life forms.

Conventional mine acid treatment involves (a) neutralization, (b) aeration, (c) settling and disposal of sludge, and (d) effluent discharge. The conventional methods often involve contact times for treatment chemistries to be effective. Furthermore, known methods involve large machinery which is not easily transportable. For example, United States Patent No. 1,310,383 discloses a process for treatment of acid drainage water from mines. The disclosure involves a process whereby acid mine drainage water is collected. The water is neutralized and the neutralized water is agitated and aerated, thus precipitating the resultant sludge.

United States Patent No. 3920552 discloses a self-contained water treatment unit. This unit is retained on a large truck. The water is removed from a source, such as a lake or stream and treated on the truck, then redeposited into the source.

United States Patent No. 4351720 discloses a water treating apparatus. The apparatus is placed directly in a stream and has outwardly extending walls for receiving the water into the unit, which is treated therein.

Small operators with limited budgets are unable to provide the necessary complex water treatment facilities, such as discussed above. Therefore, the polluted water often goes untreated.

US-A-4297214 discloses apparatus for aeration of liquid waste in an activated sludge tank comprising a hollow shaft, a centrifugal impeller fixed at the bottom of the shaft and an intake for liquid to the impeller adjacent the periphery of the shaft. The interior of the shaft communicates with the interior of the impeller, in the region of the liquid intake, through a plurality of openings in the shaft. In use, the shaft is extended vertically into the waste liquid to be treated so that the impeller is submerged in the liquid and the shaft, and thus the impeller, are rotated by means of a motor in driving connection with the upper end of the shaft, the motor and upper end of the shaft being supported above the liquid. Upon rotation of the shaft by the motor, waste fluid is drawn into the impeller via the liquid intake and is discharged radially from the impeller together with air drawn in, in the intake region, through the said openings in the shaft, from the interior of the shaft, whereby the liquid is continuously agitated and aerated.

There remains a need for an improved method for treating acid water, including acid drainage water from mines and for apparatus for carrying out such a method which is transportable and lower in cost than what has been known previously.

It is among the objects of the invention to provide a method and apparatus meeting the above-noted needs.

According to one aspect of the invention there is provided a water treatment apparatus comprising a reaction vessel, an influent pipe operatively connected to said reaction vessel for delivering water to be treated from a water source to a predetermined location within said reaction vessel, means for discharging an oxidant into said reaction vessel, said means comprising an aerator having an aerator shaft extending into said vessel to a discharge end generally adjacent said predetermined location, agitation means disposed generally adjacent said predetermined location, wherein said agitation means comprises an aerator propeller means operatively associated with the discharge end of said aerator shaft, chemical supply conduit means for carrying a fluid treatment chemical agent, and having a discharge end leading into said vessel for delivering said chemical agent generally adjacent to said agitation means, automated metering and control means for delivering said chemical agent into said reaction vessel, and an effluent discharge pipe operatively connected to said reaction vessel.

Such apparatus is readily adaptable to provide the necessary equipment to treat acidic, metal-bearing water by means of an easily transportable package. The enhanced efficiency of the unit minimises power consumption requirements and lends itself to remote and low-cost operation.

According to another aspect of the invention, there is provided a method of treating acidic water comprising, introducing acidic water to be treated into a treatment unit, introducing a neutralising agent into said treatment unit at a predetermined location, said neutralising agent addition rate being monitored and controlled by automated pH metering and control means, introducing oxidant at a point adjacent said predetermined location, agitating said water, oxidant and neutralising agent at said predetermined location, discharging treated water from the unit and recovering precipitates from said discharged treated water.

In its preferred form, to be described in detail below, the invention provides an apparatus and method of water treatment for the purpose of precipitating metals and neutralisation of acid found in water such as that which results from mine drainage. The preferred apparatus is adapted to be a transportable water treatment facility having the capability to introduce chemicals and gases into influent water. Treated water is discharged into a settling basin or thickener to allow settling of metal oxides and hydroxides. This produces a decanted water suitable for discharge.

More particularly, the apparatus, in a preferred form, consists of a skid, a cylindrical reaction vessel, a series of baffles within the reaction vessel, pH monitoring means, and piping to facilitate the contact of air, water and the necessary chemicals. Exterior to the tank are the aeration motor, metering pump, control panels, and other necessary parts. The preferred method utilizing the preferred apparatus involves connecting the water treatment means to the water process stream. A source of power may be preferably incorporated into the unit. Also, a source of the necessary chemicals may also be incorporated into the unit.

An embodiment of the invention is described below, by way of example, with reference to the accompanying drawings, in which:

FIGURE 1 is a front elevation of an apparatus embodying the present invention,

FIGURE 2 is a side elevation of the apparatus of Figure 1, and

FIGURE 3 is a sectional view of a part of the apparatus of Figures 1 and 2 showing the aerator motor and the point where air and a neutralizing agent are simultaneously introduced into the system.

In the following there is described a preferred method of , and apparatus for, treating acid water such as acid drainage water from a mine. The preferred apparatus includes a reaction vessel having a series of baffles therein, a pH monitoring probe and an aerator motor, all mounted on a skid, the apparatus having the necessary piping connecting the aforementioned equipment to a source of the raw water, such as a stream. In use, a power source which may be, for example, a portable generator or a mains power line, is connected to the apparatus to energize the system. A caustic fluid is injected into the system which neutralizes the acid in the water. At substantially the same point at which the caustic fluid is injected, an aerator introduces air, as an oxidant, into the influent flow stream. The neutralization means and aeration means are in generally close proximity and oriented in generally the same axial position. The flow stream experiences substantially instantaneous elevation of pH and the rate at which the oxidation required for treatment proceeds is thereby greatly accelerated. This eliminates the need for long contact times for treatment chemistries to occur.

The preferred apparatus to be described takes the form of a readily transportable water treatment unit which effectively introduces chemicals and gases into influent water in order to oxidize metals and remove them through precipitation, to neutralize acid contained in the water, and further to introduce oxidants into the water.

In the preferred apparatus and method treatment of the water is maximised by introducing the neutralizing agent and the oxidant into the water system simultaneously at the same point.

The apparatus and associated method to be described requires a relatively low power input and provides water treatment at a low cost.

By means of the apparatus and method to be described, it is possible to treat acid mine water in a way which reduces the reaction time necessary for neuttralization and for oxidation of metals.

The apparatus to be described is readily movable, requires no operator and makes optimum use of power and chemicals. Furthermore, the apparatus requires little maintenance.

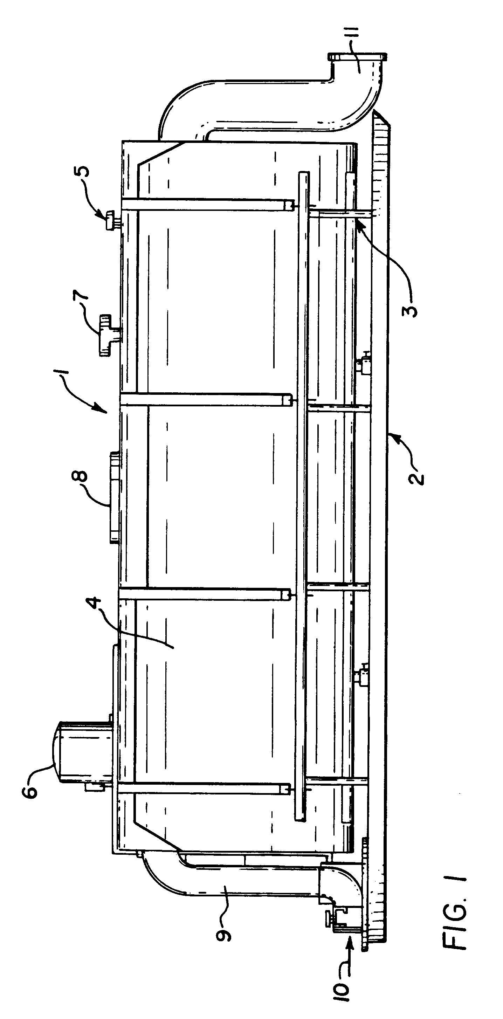

Referring to Figure 1, a portable treatment apparatus 1 for treatment of acid drainage water from a mine is shown. The treatment unit 1 is preferably mounted on a skid 2 by suitable mounting means 3. The unit comprises a cylindrical reaction vessel 4 having a plurality of baffles disposed therein (not shown). Reaction vessel 4 has pH monitoring probe 5 mounted therein. This probe may be any suitable standard industrial quality pH probe. An aerator motor 6 is also mounted on reaction vessel 4. Reaction vessel 4 has an air vent 7 and a manway 8 on the top portion thereof.

An influent conduit 9 is adapted to be connected to a source of water for treatment, such being indicated by the arrow 10. An effluent conduit 11 discharges the treated water.

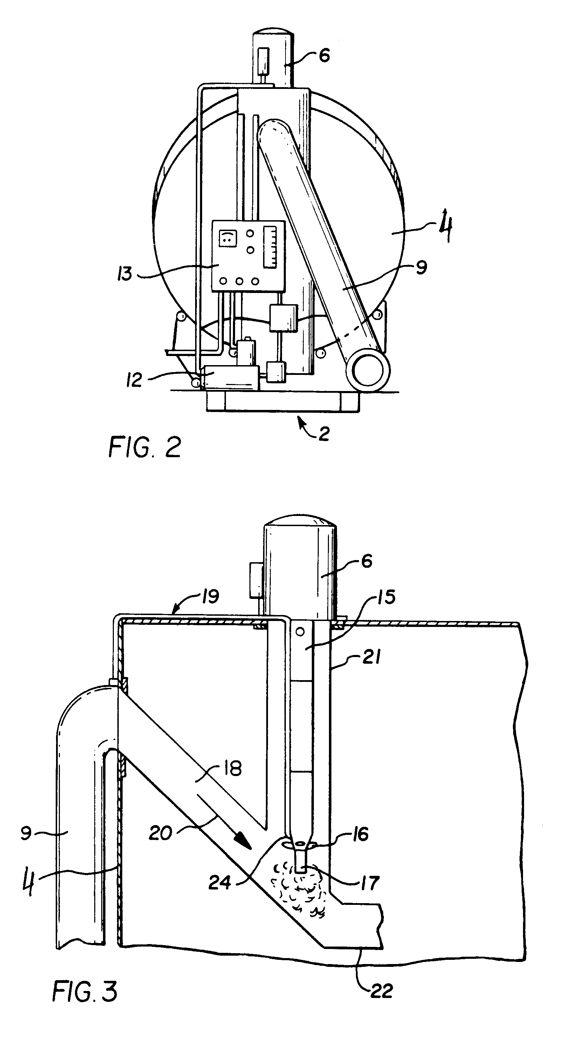

Figure 2 shows a metering pump 12, which is used to control the amount of a fluid neutralizing agent introduced into the system. Control panel 13 is used to monitor the flow of such neutralizing fluid into the system. For example, a metering pump capable of delivering 1GPM (gallon per minute) of a fluid neutralization agent comprising 20% sodium hydroxide solution will supply enough of such neutralizing agent to treat 360GPM of a typical mine drainage water containing 330ppm iron. The metering pump may be controlled by suitable automatic control means in response to the pH monitoring device, to maintain a proper pH level for the effluent.

The method of treating the water is described below in more detail with reference to Figure 3. Influent water to be treated is received through influent pipe 9 and passed into the interior of the reaction vessel 4 by way of a conduit 18. The direction of flow is shown by arrow 20. A conduit 21 within the vessel 4 contains an aerator shaft 15, which extends from aerator motor 6. A feed line 19 extends from pump 12 along the outside of reaction vessel 4 to a position adjacent the aerator motor 6 and thence passes into the vessel 4, within the conduit 21, and parallel with the aerator shaft to terminate, at its lower end 24, in a discharge opening adjacent to the lower, discharge end of shaft 15. In operation, air from outside the unit is caused by the aerator 6 to flow through aerator shaft 15 and is discharged at the lower end of the shaft, through a diffuser 17. At the same time, a propeller 16 at the lower end of the shaft agitates the mine water supplied via conduit 18 to ensure thorough mixing of the neutralizing agent and thorough contacting of the water with the air from the diffuser 17.

In one form of the apparatus, the shaft 15 is rotated about its axis by the aerator motor, the latter being hollow, and the propeller 16 is integral with the shaft 15 to rotate therewith. The neutralizing agent supplied through caustic feed line 19 enters the system just above aerator prop 16. Thus, the water to be treated, represented by flow arrow 20, meets the oxidation and the neutralization agents (air and caustic soda solution) at substantially the same point, where thorough mixing takes places.

In this way, as aeration and neutralization take place at generally the same point in the process flow, the flow stream experiences instantaneous elevation of pH and the rate of oxidation, which oxidation is required for water treatment, is greatly accelerated. After mixing of the oxidant, the neutralization agent and the water to be treated, conduit 22 sends the mixture to an area of the tank that may contain internal baffles (not shown).

Internal baffles allow for mixing, turbulence increasing and extended contact time. The baffles insure that the treatment reactions are complete prior to discharge from the reaction vessel. The baffles are preferably elongated planar sheets spaced equidistantly throughout the tank and having openings therein. The baffles may be the full height of the tank or only a portion of the height of the tank. The number and location of the baffles, the height of the baffles inside the tank and the size of the openings therein are dependent upon the type of fluid flow that is contemplated for the system. For example, in a 1,000 gallon tank two baffles may be placed an equal distance from each other and from the walls of the tank. The baffles may be stationary fiberglass perforated plates spaced evenly in the tank.

In operation, the device receives water to be treated through influent pipe 9. The water is thus received into conduit 18 and is sent to the point of mix. Aerator motor 6 creates a flow of air through aerator shaft 15. After passing through the vessel 4 the treated fluid is sent to a detention structure for clarification of the treated effluent, for example, to a settling structure for solids removal. At this point, the settlement of sludge occurs.

The simultaneous introduction of the air, water and the neutralizing agent in a regulated manner accelerates the reaction time. Because of this accelerated reaction time, large bulk mixing and reaction chambers are not needed. Through the use of precision metering and control equipment, the process disclosed is self-regulating, compact, easily transportable, and can operate from any of a number of different power sources such as a portable generator or a mains line.

The unit can be used with any type of water source and can be readily transported, requires no operator, makes optimum use of power and chemicals, and requires little maintenance.

It will be appreciated that other neutralizing agents may be used. For example instead of sodium hydroxide solution, potassium hydroxide solution may be used or a mixture of potassium hydroxide and sodium hydroxide in solution may be used. Furthermore, an additional treatment fluid may be supplied to the mixing point within conduit 18 through a further line (not shown) similar to line 19, and such additional fluid may likewise, if appropriate, be metered by a suitable metering pump which may be controlled by further means monitoring the fluid in the vessel 4.

The unit described minimizes power consumption requirements and lends itself to remote and low-cost operation. In addition, the possibility exists that ozone, alone or with different reagents such as hydrogen peroxide, can be supplied to the vessel 4 in the region of the mixing point, through the aerator, to expand the range of environments in which this invention may be used.

Furthermore, it will be understood that apparatus similar to that disclosed may be used for treating polluted water with different gases and/or different treatment fluids, apart from the oxidant air and sodium hydroxide solution disclosed. That is, other environments and other types of chemicals for treating various types of pollution are contemplated as within the scope of the claimed invention.

Whereas particular embodiments of the invention have been described above, for purposes of illustration, it would be evident to those skilled in the art that numerous variations of the details may be made without departing from the invention as defined in the appended claims.

**Claims**

**1.** A water treatment apparatus comprising a reaction vessel (4), an influent pipe (9, 18) operatively connected to said reaction vessel for delivering water to be treated from a water source to a predetermined location within said reaction vessel, means for discharging an oxidant into said reaction vessel, said means comprising an aerator (15, 17) having an aerator shaft (15) extending into said vessel to a discharge end (17) generally adjacent said predetermined location, agitation means (16) disposed generally adjacent said predetermined location, wherein said agitation means comprises an aerator propeller means (16) operatively associated with the discharge end of said aerator shaft (15), chemical supply conduit means (19) for carrying a fluid treatment chemical agent, and having a discharge end (24) leading into said vessel for delivering said chemical agent generally adjacent to said agitation means (16), automated metering and control means (12, 13) for delivering said chemical agent into said reaction vessel, and an effluent discharge pipe (11) operatively connected to said reaction vessel.

2. The water treatment apparatus of claim 1 wherein said reaction vessel (4) has baffles disposed therein to guide water being treated during its flow through the vessel from said predetermined location to said effluent discharge pipe (11).

3. The water treatment apparatus of claim 1, which is mounted on a skid.

4. The water treatment apparatus of claim 1, including pH monitoring means operatively associated with said reaction vessel.

5. A method of treating acidic water comprising, introducing acidic water to be treated into a treatment unit, introducing a neutralising agent into said treatment unit at a predetermined location, said neutralising agent addition rate being monitored and controlled by automated pH metering and control means, introducing oxidant at a point adjacent said predetermined location, agitating said water, oxidant and neutralising agent at said predetermined location, discharging treated water from the unit and recovering precipitates from said discharged treated water.

6. The method of claim 5, wherein said oxidant comprises air.

7. The method of claim 6 wherein prior to treatment, said water is removed from a stream for introduction into said treatment unit; and after discharge of said treated water from said treatment unit the treated water is passed into a settling structure for solids removal and is thereafter discharged into said stream.

**Revendications**

1. Un dispositif pour le traitement d'eau comprenant une cuve de réaction (4), un tuyau affluent (9, 18) relié en fonctionnement à ladite cuve de réaction pour délivrer l'eau à traiter d'une source d'eau à un endroit prédéterminé à l'intérieur de ladite cuve de réaction, un moyen pour évacuer un oxydant dans ladite cuve de réaction, ledit moyen comprenant un aérateur (15, 17) ayant un arbre d'aérateur (15) s'étendant dans ladite cuve à une extrémité d'évacuation (17) généralement adjacente audit endroit prédéterminé, un moyen d'agitation (16) généralement disposé adjacent audit endroit prédéterminé, ledit moyen d'agitation comprenant un moyen d'hélice d'aérateur (16) associé en fonctionnement à l'extrémité d'évacuation, dudit arbre d'aérateur (15), un moyen de conduit d'alimentation de produit chimique (19) pour apporter un agent chimique de traitement fluide, et ayant une extrémité d'évacuation (24) conduisant dans ladite cuve pour délivrer ledit agent chimique généralement adjacent audit moyen d'agitation (16), un moyen de dosage et de contrôle automatique (12, 13) pour délivrer ledit agent chimique dans ladite cuve de réaction, et un tuyau d'évacuation des effluents (11) relié en fonctionnement à ladite cuve de réaction.

2. Le dispositif pour le traitement d'eau de la revendication 1 dans lequel ladite cuve de réaction (4) a des chicanes disposées à l'intérieur de celle-ci pour guider l'eau en cours de traitement pendant son écoulement à travers la cuve dudit endroit prédéterminé audit tuyau d'évacuation des effluents (11).

3. Le dispositif pour le traitement d'eau de la revendication 1, qui est monté sur un patin.

4. Le dispositif pour le traitement d'eau de la revendication 1, incluant un moyen de surveillance du pH associé en fonctionnement à ladite cuve de réaction.

5. Un procédé pour le traitement d'eau acide comprenant l'introduction de l'eau acide à traiter dans une unité de traitement, l'introduction d'un agent de neutralisation dans ladite unité de traitement à un endroit prédéterminé, le taux d'addition dudit agent de neutralisation étant surveillé et contrôlé par un moyen de dosage et de contrôle automatique du pH, l'introduction d'oxydant à un point adjacent audit endroit prédéterminé, l'agitation desdits eau, oxydant et agent de neutralisation audit endroit prédéterminé, l'évacuation de l'eau traitée de l'unité et la récupération du précipité de ladite eau traitée évacuée.

6. Le procédé de la revendication 5, dans lequel ledit oxydant comprend de l'air.

7. Le procédé de la revendication 6 dans lequel avant le traitement, ladite eau est retirée d'un cours d'eau pour introduction dans ladite unité de traitement ; et après évacuation de ladite eau traitée de ladite unité de traitement l'eau traitée est passée dans une structure de décantation pour retrait des solides et est ensuite évacuée dans ledit cours d'eau.

## Patentansprüche

1. Wasserbehandlungsvorrichtung, die einen Reaktionsbehälter (4), ein Zulaufrohr (9, 18), das betrieblich mit besagtem Reaktionsbehälter verbunden ist, um zu behandelndes Wasser von einer Wasserquelle zu einer vorbestimmten Stelle innerhalb besagten Reaktionsbehälters zu befördern, Mittel zum Abgeben eines Oxidationsmittels in besagten Reaktionsbehälter, wobei besagte Mittel einen Belüfter (15, 17) umfassen, der einen Belüfterschaft (15) aufweist, der sich bis zu einem Abgabeende (17), das im allgemeinen benachbart zu besagter vorbestimmter Stelle liegt, in besagten Behälter hineinerstreckt, eine Rühreinrichtung (16), die im allgemeinen benachbart zu besagter vorbestimmter Stelle angeordnet ist, wobei besagte Rühreinrichtung eine Belüfterpropellereinrichtung (16) umfaßt, die betrieblich mit dem Abgabeende besagten Belüfterschaftes (15) verbunden ist, eine Rohrleitung für die Zuführung von Chemikalien (19) zum Fördern eines flüssigen chemischen Behandlungsmittels, die ein Abgabeende (24) aufweist, das in besagten Behälter hineinführt, um besagtes chemisches Mittel im allgemeinen benachbart zu besagter Rühreinrichtung (16) zuzuführen, automatisierte Meß- und Steuermittel (12) zum Zuführen besagten chemischen Mittels in besagten Reaktionsbehälter und ein Ablaufabgaberohr (11), das betrieblich mit besagtem Reaktionsbehälter verbunden ist, umfaßt.

2. Wasserbehandlungsvorrichtung nach Anspruch 1, dadurch gekennzeichnet, daß besagter Reaktionsbehälter (4) in seinem Inneren angeordnete Leitplatten aufweist, um Wasser, das behandelt wird, während seines Durchflusses durch den Behälter von besagtem vorbestimmten Ort zu besagtem Ablaufabgaberohr (11) zu leiten.

3. Wasserbehandlungsvorrichtung nach Anspruch 1, dadurch gekennzeichnet, daß sie auf einer Gleitunterbau angebracht ist.

4. Wasserbehandlungsvorrichtung nach Anspruch 1, gekennzeichnet durch pH-Überwachungsmittel, die betrieblich mit besagtem Reaktionsbehälter verbunden sind.

5. Verfahren zur Behandlung von saurem Wasser, dadurch gekennzeichnet, daß zu behandelndes saures Wasser in eine Behandlungseinheit eingebracht wird, daß ein Neutralisierungsmittel an einer vorbestimmten Stelle in besagte Behandlungseinheit eingebracht wird, wobei die Zugaberate des Neutralisierungsmittels von automatisierten pH-Meß- und Steuermitteln überwacht und gesteuert wird, daß an einem Punkt, der zu besagtem vorbestimmten Ort benachbart ist, Oxidationsmittel eingebracht wird, daß besagtes Wasser, besagtes Oxidationsmittel und besagtes Neutralisationsmittel an besagtem vorbestimmten Ort gerührt wird, daß behandeltes Wasser aus der Einheit abgegeben wird und daß Niederschläge aus besagtem abgegebenen behandelten Wasser zurückgewonnen werden.

6. Verfahren nach Anspruch 5, dadurch gekennzeichnet, daß besagtes Oxidationsmittel Luft umfaßt.

7. Verfahren nach Anspruch 6, dadurch gekennzeichnet, daß vor der Behandlung besagtes Wasser zum Einbringen in besagte nach Abgabe besagten behandelten Wassers aus besagter Behandlungseinheit das behandelte Wasser in eine Absetzkonstruktion zur Entfernung von Feststoffen überführt und danach in besagten Strom abgegeben wird.

FIG. 1

EP 0 230 894 B1

FIG. 2

FIG. 3